Europäisches Patentamt

European Patent Office

Office européen des brevets

(19)

(11) **EP 1 140 949 B1**

(12) **FASCICULE DE BREVET EUROPEEN**

(45) Date de publication et mention
de la délivrance du brevet:
**02.05.2003 Bulletin 2003/18**

(51) Int Cl.⁷: **C07F 7/12**

(21) Numéro de dépôt: **99959503.6**

(22) Date de dépôt: **21.12.1999**

(86) Numéro de dépôt international:
**PCT/FR99/03214**

(87) Numéro de publication internationale:
**WO 00/039132 (06.07.2000 Gazette 2000/27)**

(54) **PROCEDE DE PREPARATION D'ALKYLHYDROGENOHALOSILANES (AHHS) PAR HYDROGENATION CATALYTIQUE**

VERFAHREN ZUR HERSTELLUNG VON ALKYLWASSERSTOFFHALOSILANEN MITTELS KATALYTISCHER HYDRIERUNG

METHOD FOR PREPARING ALKYL HYDROGENO HALOSILANES (AHHS) BY CATALYTIC HYDROGENATION

(84) Etats contractants désignés:
**AT BE CH CY DE DK ES FI FR GB GR IE IT LI LU MC NL PT SE**

(30) Priorité: **28.12.1998 FR 9816693**

(43) Date de publication de la demande:
**10.10.2001 Bulletin 2001/41**

(73) Titulaire: **RHODIA CHIMIE**
**92408 Courbevoie Cédex (FR)**

(72) Inventeurs:
• **COLIN, Pascale**
**F-69680 Chassieu (FR)**
• **JACQUOT, Roland**
**F-69340 Francheville (FR)**
• **MOREL, Philippe**
**F-38200 Chuzelles (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 714 900**      **FR-A- 2 342 981**

**Description**

La présente invention concerne l'hydrogénolyse catalytique de liaisons Si-X (X = halogène, de préférence Cl) comprises dans des composés de type alkylhalosilane **(ahs)**, par exemple méthylchlorosilane, pour transformer ces **ahs** en alkylhydogénohalosilanes **(ahhs)**, par exemple méthylhydrogénochlorosilane. En particulier, l'hydrogénolyse visée par l'invention est du genre de celles faisant intervenir de l'hydrogène gazeux et un catalyseur métallique avec production d'hydrure d'halogene

Plus particulièrement encore, l'invention concerne la valorisation de sous-produits de la synthèse directe (ou synthèse de Rochow-Muller) qui permet la production de méthyichlorosilanes (MCS) qui sont des monomères de base pour la fabrication de silicones par hydrolyse de liaisons Si-Cl et création par polycondensation de polysiloxanes à motifs siloxyles "D" ($-Me_2SiO_{22}-$), "M" ($-Me_3SiO-$), "T"($-MeSiO_{3/2}-$), "Q"($-SiO_{4/2}$). La synthèse directe s'effectue par réaction entre le silicium métallique et le chlorure de méthyle à une température comprise entre 250 et 300°C, en présence d'un catalyseur à base de cuivre, de zinc ou d'étain. Cette synthèse conduit à un mélange dans lequel le diméthylchlorosilane $Me_2SiCl_2$ est majoritaire (environ 90%) mais aussi à des produits plus lourds constitués principalement de disilanes (environ 8%) de formule : $Me_pCl_{3-p}-Si-Si-Cl_{3-q}Me_q$ (p, q = 1 ou 2).
D'autres MCS dits "légers" sont également formés à l'issue de cette synthèse directe. Ces MCS légers sont produits en faible proportion. Il s'agit notamment du $MeSiCl_3$ (7-18%), du $MeSiCl_2$ (0,5%) et en plus faibles quantités encore le $Me_2HSiCl$, le $MeHSiCl_2$, le $Me_4Si$, le $HSiCl_3$ et l'isopentane. Les MCS légers sont compris dans le flux sortant de la tête d'une ou plusieurs colonnes de distillation. Cette opération de distillation permet la séparation des différents produits de la synthèse directe.

Parmi les MCS légers, $MeSiCl_2$ constitue la brique de base pour la formation de chaînes polysiloxanes à motifs D ($-Me_2SiO-$), $Me_3SiCl$ sert de bloqueur en bout de chaîne, $MeSiCl_3$ permet la réticulation du polymère et les composés $MeHSiCl_2$ et $Me_2HSiCl$ rendent possible la fonctionnalisation du polymère par utilisation de la liaison Si-H, $Me_2HSiCl$ qui ne possède qu'une liaison Si-Cl, permet une fonctionnalisation sélective en bout de chaîne, qui est particulièrement recherchée. Ainsi, la valeur relative des MCS par rapport à $Me_2HSiCl_2$ (référence = 1) s'établit comme suit :

$$Me_2HSiCl\ (10\text{-}100) > Me_3SiCl\ (2\text{-}3) > MeHSiCl_2\ (0{,}5\text{-}1{,}5) > MeSiCl_3\ (0.1\text{-}0.2).$$

Industriellement, la production de $MeSiCl_3$ est largement supérieure aux besoins. Le souhait des industriels serait donc de valoriser $MeSiCl_3$. Les hydrogénométhylchlorosilanes $Me_2HSiCl$ et $MeHSiCl_2$ étant très recherchés, on peut envisager de les produire à partir des méthylchlorosilanes $Me_2SiCl_2$ et $MeSiCl_3$ respectivement qui sont très disponibles et peu coûteux.

C'est ainsi qu'ont été proposes divers procèdes d'hydrogénolyse de liaisons Si-Cl compris dans des **ahs** par l'hydrogène moléculaire, selon les reactions suivantes :

$$Me_2SiCl_2 + H_2 \leftrightarrow Me_2ClSiH + HCl$$

$$MeSiCl_3 + H_2 \leftrightarrow MeCl_2SiH + HCl$$

Ces réactions sont catalysées par au moins un composé métallique.

Parmi les procédés connus d'hydrogénation des alkylhalogénosilanes, en particulier des méthylchlorosilanes, on peut citer celui décrit dans le brevet US N° 5 329 038, selon lequel on procède à l'hydrogénation de diméthyldichlosilane à l'aide de gaz hydrogène, en présence d'aluminium et d'un catalyseur choisi dans le groupe comprenant le cuivre, l'étain, le zinc ou les dérivés de ces métaux.

La demande de brevet européen N° 714 900 décrit l'hydrogénation catalytique en phase vapeur d'alkylhalogéno(chloro)silanes pour produire des alkylhydrogénohalogéno(chloro)silanes, en présence d'un catalyseur métallique choisi dans le groupe comprenant le palladium, le platine, le ruthénium, éventuellement supporté sur charbon actif et/ou sur oxyde d'aluminium et/ou sur oxyde de titane et/ou de silicium. Plus précisément, cette demande européenne décrit la transformation de $Me_2SiCl_2$ en $Me_2HSiCl$, $MeHSiCl_2$ et $Me_3SiCl$. Les catalyseurs mis en oeuvre dans les exemples sont respectivement le palladium sur charbon activé, le platine sur charbon activé et le ruthénium sur alumine. L'hydrogène gazeux est mélangé au $Me_2SiCl_2$ se présentant lui aussi sous forme gazeuse. Les températures réactionnelles sont de 340 et de 400°C sous des pressions de 2, 6 et 10 bars. Il est à noter que pour obtenir une sélectivité en $MeHSiCl_2$ de l'ordre de 50%, il est nécessaire selon ce procédé de mettre en oeuvre des pressions de 6 et 10 bars qui sont relativement difficiles à gérer au niveau industriel.

La demande de brevet europeen N° 714 901 possède le même contenu que la demande EP N° 714 900 étudiée ci-dessus, à la différence près que le catalyseur d'hydrogénation mis en oeuvre est cette fois l'acide hexachloroplatinique.

Dans un tel état de la technique, l'un des objectifs essentiels de la présente invention est de proposer un procédé de préparation d'alkylhydrogénohalosilanes **ahhs,** en particulier des monosilanes du genre méthylhydrogénochlorosilanes, par hydrogénation catalytique d'alkylhalosilanes (**ahs**) du type méthylchlorosilane, en présence d'un catalyseur métallique, un tel procédé se devant de permettre l'obtention de sélectivites élevees en alkylhydrogénohalosilanes, (en particulier en méthylhydrogénochlorosilanes) sans qu'il soit pour autant nécessaire d'avoir recours à des conditions drastiques et peu industrielles de mise en oeuvre (haute pression)

Un autre objectif essentiel de la présente invention est de fournir un procédé d'hydrogénation catalytique en phase vapeur d'alkylchlorosilanes, en particulier de méthylchlorosilanes, en alkylhydrogénohalosilanes, en particulier méthylhydrogénochlorosilanes, qui soit simple à réaliser et économique.

Un autre objectif essentiel de l'invention est de fournir un procédé de valorisation de $MeSiCl_3$, par hydrogénation catalytique en phase vapeur de ce sous-produit de la synthèse directe, aux fins d'obtenir du $MeHSiCl_2$ qui peut être utilement exploité dans la production de motifs siloxyles D greffables ou bien encore transformé en MeHSiCl par redistribution de chlore à partir de $Me_3SiCl$.(FR N°96 07 559 et 97 16 047).

Un autre objectif essentiel de la présente invention est de fournir un procédé de préparation d'alkylhydrogénohalosilanes (e.g. méthylhydrogénochlorosilanes) en hydrogénant un alkylhalosilane (e.g. méthylchlorosilane), à l'aide de gaz hydrogène en présence d'un catalyseur métallique ayant pour caractéristique d'être particulièrement performant et sélectif en MeH et d'être par ailleurs d'un faible coût de revient et obtenable à l'échelle industrielle sous forme homogène.

Un autre objectif essentiel de l'invention est de fournir un procédé de préparation d'**ahhs** par hydrogénation catalytique d'**ahs**, en présence d'un catalyseur métallique, ce procédé se devant de remédier aux inconvénients des procédés selon l'art antérieur.

S'étant fixés ces objectifs, parmi d'autres, les inventeurs ont eu le mérite de sélectionner, après de longues et laborieuses recherches et expérimentations, un catalyseur spécifique ruthénium/étain permettant d'atteindre tous les objectifs susvisés notamment en termes de sélectivité en alkylhydrogénohalosilanes ($MeHSiCl_2$).

D'où il s'ensuit que la présente invention concerne un procédé de préparation d'alkylhydrogénohalosilanes **(ahhs)** de formule (I)

$$(I) \qquad R_{4-m-n} \, SiH_m X_n$$

dans laquelle:

- R représente indépendamment un alkyle, de préférence un alkyle linéaire ou ramifié, en $C_1$-$C_6$, et plus préférentiellement encore un méthyle,
- X représente indépendamment un halogène, de préférence le chlore;
- m, n = 1 ou 2 et m + n $\leq$ 3

par hydrogénation catalytique d'alkylhalogénosilanes (**ahs**) de formule (II):

$$(II) \qquad R_{(4-p)} SiX_p$$

avec p = 1, 2 ou 3,
selon la réaction:

$$R_{(4-p)} \, SiX_p + H_2 \rightarrow R_{4-m-n} \, SiH_m X_n + H_{m'} X_{n'}$$

avec n' + n = p et m' = 0 ou 1;
en présence d'un catalyseur métallique,
caractérisé ce que le catalyseur comprend un agent catalytique bimétallique Ruthénium/Etain.

L'un des fondements de la présente invention est donc la sélection d'un catalyseur métallique particulier, qui permet d'atteindre des sélectivités en $MeHSiCl_2$ élevées lorsque le produit de départ à hydrogéner est constitué par du $MeSiCl_3$.

L'agent catalytique sélectionné dans le procédé de l'invention peut être avantageusement défini au travers de son procédé d'obtention. C'est ainsi que, de manière préférentielle, cet agent catalytique est obtenu la réduction d'un complexe du ruthénium ayant une électrovalence -4 et un nombre de coordination de 6, les coordinats étant soit un atome d'halogène, soit un anion d'un halogénure d'étain.

De manière plus préférentielle encore, le complexe répond à la formule (A) suivante

$$(Ru(SnX_3)_{6-n}X_n]^{4-} \tag{A}$$

dans ladite formule (A), X représente un atome d'halogène, de préférence un atome de chlore ou de brome et n est un nombre variant de 0 à 2, et, de préférence, égal à 1.

Suivant une disposition avantageuse du procédé de l'invention, on retient en pratique les complexes suivants à titre d'agents catalytiques:

$$-[Ru(SnCl_3)_6]^{4-} \tag{A1}$$

$$-[Ru(SnCl_3)_5Cl]^{4-} \tag{A2}$$

$$-[Ru(SnCl_3)_4Cl_2]^{4-} \tag{A3}$$

Le complexe halogéné du Ruthénium et de l'étain, sélectionné conformément à l'invention et répondant préférentiellement aux formules (A1) à (A3), a pour avantage non négligeable d'être de bonne qualité lorsqu'il est obtenu comme indiqué ci-dessus.

De manière plus précise et plus avantageuse, ce complexe peut être produit par réaction d'un halogénure de ruthénium et d'un halogénure d'étain, en présence d'un acide.

En pratique et sans que cela ne soit limitatif, l'halogénure de ruthénium est un halogénure de ruthénium III, sous forme anhydre ou hydratée, de préférence un chlorure de ruthénium III, et l'halogénure d'étain II, sous forme anhydre ou hydratée, est de préférence le chlorure d'étain II.

Pour plus de détails sur l'agent catalytique ruthénium/étain utilisé dans le procédé de l'invention, on se référera à la demande de brevet FR 9 513 185, qui décrit largement cet agent catalytique en termes d'obtention et de structure.

Suivant un mode préféré de mise en oeuvre du procédé d'hydrogénation catalytique selon l'invention, on a recours à un catalyseur qui comprend au moins un support solide imprégné par au moins un agent catalytique tel que défini supra par son mode d'obtention.

Toujours selon ce mode préféré de mise en oeuvre, il est avantageux que le support soit sous forme de poudre, de billes, de granulés, d'extrudés, entre autres.

En pratique, le support est choisi parmi les oxydes de métaux, de préférence, les oxydes d'aluminium, de silicium et/ou de zirconium, les charbons actifs et les résines.

Dans le souci d'optimisation du procédé selon l'invention, il est préférable que le catalyseur ait une concentration en ruthénium

[Ru] définie comme suit en % poids sur sec :

$$0.1 \le [Ru] \le 20$$

de préférence

$$0.4 \le [Ru] \le 10$$

et plus preférentiellement encore

$$1 \le [Ru] \le 8$$

Dans le contexte de la selection du catalyseur conformement a l'invention, il est intéressant que le ratio molaire Sn Ru du catalyseur soit definit comme suit :

$$0.1 \leq Sn/Ru \leq 30$$

de préférence

$$0.4 \leq Sn/Ru \leq 10$$

et plus preférentiellement encore

$$1 \leq Sn/Ru \leq 8.$$

S'agissant des autres paramètres de mise en oeuvre du procédé selon l'invention, il est utile de préciser que l'on effectue, de préférence, l'hydrogénation des **ahs** (II) en **ahhs** (I) à une température réactionnelle. θr définie comme suit en °C :

$$200 \leq \theta r \leq 600$$

de préférence

$$400 \leq \theta r \leq 500$$

Concernant la pression réactionnelle privilégiée conformément à l'invention, on peut préciser qu'elle est en pratique inférieure à 2 bars et, de préférence, correspond sensiblement à la pression atmosphérique.

Sur le plan de la stoechiométrie de la réaction au coeur du procédé suivant l'invention, on fait, de préférence, en sorte qu'elle soit telle que le ratio $H_2$/**ahs** (II) se définisse comme suit en équivalents :

$$1 \leq H_2/(II) \leq 100$$

de préférence

$$10 \leq H_2/(II) \leq 20$$

Selon une disposition pratique préférée de l'invention, on réalise l'hydrogénation du **ahs** (II) en phase vapeur par catalyse hétérogène.

Il est clair que dans une logique industrielle, il est préférable que le procédé selon l'invention soit mis en oeuvre en continu en prenant des dispositions telles que le débit gazeux des réactifs mis en oeuvre, par exemple $MeSiCl_3$ et gaz hydrogène, soient tels que le temps de contact Tc desdits réactifs $H_2$ et **ahs** (II) avec le catalyseur soit

→ compris entre 0.1 et 100 s
→ et plus préférentiellement encore compris entre 0,1 et 10 s.

Avantageusement, on réalise l'hydrogénation du (II) en (I) à la pression atmosphérique.

Suivant une variante intéressante de l'invention, le gaz hydrogène réactif mis en oeuvre est mélangé à au moins un diluant gazeux, choisi de préférence parmi les gaz inertes, l'azote étant plus particulièrement préfére

En pratique, le ou les gaz diluants peuvent représenter par exemple de 40 à 60% en volume du réactif gazeux hydrogéné, de préférence environ 50%.

En ce qui concerne le substrat **ahs** (II) à hydrogéner, il s'agit de préférence de $MeSiCl_3$ que l'on transforme en $MeHSiCl_2$+HCl.

Le procédé selon l'invention, offre du fait de la sélectivité en MeH qu'il permet d'atteindre, une voie de valorisation intéressante de sous-produit de la synthése directe à faible valeur ajoutée, tels que $MeSiCl_3$.

Cela n'exclut pas pour autant que le procédé de l'invention puisse s'appliquer au $Me_2SiCl_2$, sachant que dans un tel cas, ce n'est évidemment pas la valorisation qui est visée.

Le choix du dispositif approprié pour la mise en oeuvre du procédé selon l'invention est une démarche tout à fait à la portée de l'homme du métier.

En tout état de cause, "les exemples qui suivent permettront de mieux comprendre l'invention et de percevoir tous ses avantages et variantes de mise en oeuvre. En outre, ces exemples fournissent une illustration du type de dispositif qui peut convenir pour la mise en oeuvre du procédé.

EXEMPLE 1 hydrogénation catalytique en phase vapeur de $CH_3SiCl_3$ (**ahs** (II) = Me) en $CH_3SiHCl_2$ (**ahhs** (I) = MeH)

*1.1 Préparation du catalyseur Ru Sn supporté par une poudre de silice*

Dans un tricol, on introduit 5.04 g de RuCl3, x $H_2O$ comprenant 42% en poids de ruthénium et 27.7 g de SnCl2, $2H_2O$ et 180 ml d'une solution aqueuse d'acide chlorhydrique 3N.

On chauffe en agitant à 90°C pendant 1 heure.

On refroidit ensuite cette solution à 20°C.

On ajoute ensuite 40 g de silice Degussa 0 X 50 (surface spécifique = $50m^2$ g et taille moyenne des particules primaires de 40 nm) et 400 ml d'eau.

Le précipité est filtré, lavé à l'eau

Le gâteau est ensuite malaxe et extrudé

Les extrudés sont ensuite seches a l'air, jusqu'à l'obtention d'un poids constant

Le catalyseur est ensuite traité par l'hydrogène à 450°C sous courant d'hydrogéne pendant 4 heures.

On obtient un catalyseur formé par une poudre $[Ru(SnCl_3)_5Cl]^{5-}$ sur $SiO_2$ dans lequel [Ru] = 5% en poids sec par rapport à la masse totale du catalyseur et Sn/Ru = 6

En faisant varier les proportions, on modifie à volonté [Ru] et Sn/Ru

*1.2 Appareillage et méthodologie*

On utilise un réacteur en verre constitué par une colonne incluse au sein de moyens de chauffage à θr constitués par un four électrique régulé par EUROTHERM. La tête de cette colonne présente un conduit d'alimentation en Me et un conduit d'alimentation en $H_2$.

Le culot de cette colonne est conformé en conduit d'évacuation du mélange des gaz produits.

La moitié inférieure de la colonne comprend un lit catalytique fixe disposé dans la lumière de la colonne. Ce lit comprend 3 couches superposées de quartz (5 ml), de catalyseur $[Ru(SnCl_3)_5ClJ^{5-}$ sur $SiO_2$ obtenu en 1.1 supra (5 ml) et de quartz (5 ml) respectivement.

Un thermomètre est prévu pour mesurer θr à l'intérieur du lit catalytique.

Les périphériques associés à l'entrée de la colonne sont des sources de $H_2$ et de Me et des moyens d'injection de $H_2$ et de Me (II) selon des débits contrôlés (seringue - pousse-seringue), (bouteille de H2 sous pression). Les périphériques associes à la sortie de la vanne et la colonne sont des moyens de refroidissement du mélange reactionnel gazeux produit (piège à glace et à carboglace) pour le condenser en liquide.

Les paramètres réactionnels sont :

- θr,
- [Ru]
- Sn'Ru
- débit en Me (II) par exemple 0.5 ml/heure
- débit en H2 par exemple 600 ml, heure
- volume (V) de catalyseur =5 ml pour tous les essais
- le temps de contact $T_c$ du mélange de réactif $H_2$ et Me avec le catalyseur dépend des débits en $H_2$ et Me (II) et se détermine comme indiqué ci-après :

$V_1$ = Volume Me (II) à θr (ml/s)
$V_2$ = Volume $H_2$ à θr (ml/s)
V = Volume catalyseur (ml)

$$T_c = \frac{V}{V_1 + V_2} (S)$$

EXEMPLE 2: Essais comparatifs 1C, 2C, et 3C et essais 4 à 12

Les analyses par chromatographie sont effectuées par chromatographie phase gazeuse.

La tableau I ci-après donne les conditions réactionnelles et les résultats obtenus.

## TABLEAU I

| Nº Essai | Catalyseur | | | Or | débit H₂ | débit Me | T_c | H₂/Me | Analyse produits (mmoles) | | | | RTMeH | RTSiCl | RTMe |
| | Nature | [Ru]% | Sn/Ru | °C | ml/h | ml/h | s | | MeH (1) | SiCl₃ | Me₂ | total | % (1) | % | % |
|---|---|---|---|---|---|---|---|---|---|---|---|---|---|---|---|
| 1 c | Pd 5%/C | | | 450 | 6 000 | 0,4 | 1,12 | 73 | 16,522 | 63,706 | 28,915 | 109,142 | 15,14 | 58,37 | 26,49 |
| 2 c | Ru seul | 100 | 0 | 450 | 6 000 | 0,5 | 1,12 | 77 | 0,426 | 0,000 | 25,279 | 25,705 | 1,60 | 0,00 | 93,84 |
| 3 c | Ru seul | 100 | 0 | 450 | 6 000 | 0,5 | 1,12 | 76 | 0,391 | 0,000 | 12,240 | 12,632 | 3,10 | 0,00 | 96,90 |
| 4 | Ru/Sn | 5 | 6 | 450 | 6 000 | 0,4 | 1,12 | 76 | 15,217 | 4,559 | 15,736 | 35,513 | 42,85 | 12,84 | 44,31 |
| 5 | Ru/Sn | 5 | 6 | 450 | 6 000 | 0,4 | 1,12 | 74 | 15,339 | 5,341 | 14,589 | 35,269 | 43,49 | 15,14 | 41,36 |
| 6 | Ru/Sn | 5 | 6 | 450 | 6 000 | 0,4 | 1,12 | 77 | 19,904 | 4,518 | 15,101 | 39,523 | 50,36 | 11,43 | 38,21 |
| 7 | Ru/Sn | 5 | 6 | 450 | 6 000 | 0,4 | 1,12 | 80 | 15,539 | 4,247 | 14,116 | 39,902 | 45,83 | 12,53 | 41,64 |
| 8 | Ru/Sn | 5 | 6 | 450 | 6 000 | 0,4 | 1,12 | 79 | 18,539 | 3,935 | 13,969 | 36,443 | 50,87 | 10,80 | 38,33 |
| 9 | Ru/Sn | 5 | 6 | 450 | 6 000 | 0,4 | 1,12 | 79 | 20,287 | 4,429 | 14,039 | 38,755 | 52,35 | 11,43 | 36,22 |
| 10* | Ru/Sn | 5 | 6 | 450 | 3 000 d'H₂ et 3 000 de N₂ | 0,4 | 1,12 | 77 | 11,035 | 4,165 | 13,558 | 28,758 | 38,37 | 14,48 | 47,15 |
| 11 | Ru/Sn | 5 | 6 | 450 | 6 000 | 0,4 | 1,79 | 81 | 15,313 | 3,494 | 12,876 | 31,683 | 48,33 | 11,03 | 40,64 |
| 12 | Ru/Sn | 5 | 6 | 450 | 6 000 | 0,4 | 1,79 | 79 | 16,487 | 6,535 | 15,814 | 38,836 | 42,45 | 16,83 | 40,72 |

\* le débit de gaz est constitué par 3 000 ml d'hydrogène et 3 000 ml d'azote.

**Revendications**

1. Procédé de préparation d'alkylhydrogénohalosilanes (**ahhs**) de formule **(I)**:

$$\textbf{(I)} \qquad R_{4-m-n} SiH_m X_n$$

dans laquelle:

- R représente indépendamment un alkyle, de préférence un alkyle linéaire ou ramifié, en $C_1$-$C_6$, et plus préférentiellement encore un méthyle,
- X représente indépendamment un halogène, de préférence le chlore;
- m, n = 1 ou 2 et m + n ≤ 3 par hydrogénation catalytique d'alkylhalogénosilanes (**ahs**) de formule **(II)** :

$$\textbf{(II)} \qquad R_{(4-p)}SiX_p$$

avec p = 1, 2 ou 3,
selon la réaction :

$$R_{(4-p)} SiX_p + H_2 \rightarrow R_{4-m-n} SiH_m X_n + H_{m'}X_{n'}$$

avec n' + n = p et m' = 0 ou 1 ;
en présence d'un catalyseur métallique,
**caractérisé en ce que** le catalyseur comprend un agent catalytique bimétallique Ruthénium/Etain.

2. Procédé selon la revendication 1, **caractérisé en ce que** l'agent catalytique est obtenu la réduction d'un complexe du ruthénium ayant une électrovalence -4 et un nombre de coordination de 6, les coordinats étant soit un atome d'halogène, soit un anion d'un halogénure d'étain.

3. Procédé selon la revendication 2, **caractérisé par le fait que** le complexe répond à la formule (A) suivante

$$(Ru(SnX_3)_{6-n}X_n]^{4-} \qquad \text{(A)}$$

dans ladite formule (A), X représente un atome d'halogène, de préférence un atome de chlore ou de brome et n est un nombre variant de 0 à 2, et de préférence égal à 1.

4. Procede selon la revendication 2, **caractérisé par le fait que** le complexe repond à la formule (A) suivante

$$-[Ru(SnCl_3)_6]^{4-} \qquad (A_1)$$

$$-[Ru(SnCl_3)_5Cl]^{4-} \qquad (A_2)$$

$$-[Ru(SnCl_3)_4Cl_2]^{4-} \qquad (A_3)$$

5. Procède selon l'une des revendications 2 à 4, caracrérisé par le fait que l'on prépare le complexe par réaction d'un halogenure de ruthénium et d'un halogénure d'étain, en presence d'un acide.

6. Procede selon la revendication 5, **caractérise par le fait que** l'halogénure de ruthenium est un halogénure de ruthenium III, sous forme anhydre ou hydratée, de préférence un chlorure de ruthenium III, et l'halogénure d'etain II, sous forme anhydre ou hydratée, est de préférence le chlorure d'étain II.

7. Procédé selon l'une quelconque des revendications 1 à 6, **caractérise en ce que** le catalyseur comprend au moins un support solide imprégné par au moins un agent catalytique tel que défini par son mode d'obtention dans l'une quelconque des revendications 2 à 6.

**8.** Procédé selon la revendication 7, **caractérisé par le fait que** le support est sous forme de poudre, billes, granulés, extrudés.

**9.** Procédé selon l'une des revendications 7 et 8, **caractérisé par le fait que** le support est choisi parmi les oxydes de métaux, de préférence, les oxydes d'aluminium, de silicium et/ou de zirconium, les charbons actifs et les résines.

**10.** Procédé selon l'une quelconque des revendications 1 à 9, **caractérisé en ce que** le catalyseur à une concentration en ruthénium [Ru] définie comme suit en % poids sur sec.

$$0,1 \leq [Ru] \leq 20$$

de préférence

$$0,4 \leq [Ru] \leq 10$$

et plus préférentiellement encore

$$1 \leq [Ru] \leq 8$$

**11.** Procédé selon l'une quelconque des revendications 1 à 10, **caractérisé en ce que** le ratio molaire Sn/Ru du catalyseur se définit comme suit :

$$0,1 \leq Sn/Ru \leq 30$$

de préférence

$$0,4 \leq Sn/Ru \leq 10$$

et plus préférentiellement encore

$$1 \leq Sn/Ru \leq 8$$

**12.** Procède selon l'une quelconque des revendications 1 à 11, **caractérisé en ce que** l'on effectue l'hydrogénation du **ahs** (**II**) en **ahhs** (**I**) à une température réactionnelle $\theta r$ définie comme suit en °C

$$200 \leq \theta r \leq 600$$

de préférence

$$400 \leq \theta r \leq 500$$

**13.** Procédé selon l'une quelconque des revendications 1 à 12, **caractérisé en ce que** l'on fait en sorte que la stoechiométrie de la réaction soit telle que le ratio $H_2$/**ahs** (**II**) se définisse comme suit en équivalents

$$1 \leq H_2/(II) \leq 100$$

de préférence

$$10 \leq H_2/(II) \leq 20$$

**14.** Procédé selon l'une quelconque des revendications 1 à 13, **caractérisé en ce que** l'on réalise l'hydrogénation du **ahs** (**II**) en phase vapeur par catalyse hétérogène.

**15.** Procédé selon l'une quelconque des revendications 1 à 14, **caractérisé en ce qu'**il est mis en oeuvre en continu et **en ce que** le temps de contact $T_c$ des réactifs $H_2$ et **ahs** (**II**) avec le catalyseur est :

→ compris entre 0,1 et 100 s
→ et plus préférentiellement encore compris entre 0.1 et 10 s.

**16.** Procédé selon l'une quelconque des revendications 1 à 15, **caractérisé en ce que** l'on réalise l'hydrogénation du (**II**) en (**I**) à la pression atmosphérique.

**17.** Procédé selon l'une quelconque des revendications 1 à 16, **caractérisé en ce que** le gaz $H_2$ mis en oeuvre est mélangé à au moins un diluant gazeux, choisi de préférence parmi les gaz inertes, l'azote étant plus particulièrement préféré.


**Patentansprüche**

**1.** Verfahren zur Herstellung von Alkylwasserstoffhalosilanen (ahhs) der Formel (I)

$$R_{4-m-n} \, SiH_m X_n \qquad (I)$$

in der

· R selbständig ein Alkyl, vorzugsweise ein lineares oder verzweigtes Alkyl mit 1 bis 6 Kohlenstoffatomen und noch bevorzugter ein Methyl darstellt,
· X selbständig ein Halogen, vorzugsweise Chlor bedeutet,
· m, n = 1 oder 2 sind und m + n $\leq$ 3 ist,

durch katalytische Hydrierung von Alkylhalogensilanen (ans) der Formel (II)

$$R_{(4-p)} \, SiX_p \qquad (II)$$

mit p = 1, 2 oder 3,
gemäß der Reaktion : $R_{(4-p)} \, SiX_p + H_2 \rightarrow R_{4-m-n} \, SiH_m X_n + H_{m'} X_{n'}$
mit n' + n = p und m' = 0 oder 1;
in Anwesenheit eines metallischen Katalysators,
**dadurch gekennzeichnet, daß** der Katalysator ein Ruthenium/Zinn bimetallisches katalytisches Mittel umfaßt.

**2.** Verfahren nach Anspruch 1, **dadurch gekennzeichnet, daß** das katalytische Mittel durch Reduktion eines Komplexes von Ruthenium mit einer Elektrovalenz -4 und einer Koordinationszahl von 6 erhalten wird, wobei die Liganden entweder ein Halogenacom oder ein
Anion eines zinnhalogenides sind.

**3.** Verfahren nach Anspruch 2, **dadurch gekennzeichnet, daß** der Komplex der folgenden Formel (A)

$$[Ru(SnX_3)_{6-n}X_n]^{4-} \qquad (A)$$

entspricht, wobei in der Formel (A) X ein Halogenatom darstellt, vorzugsweise ein Chloratom oder Bromatom, und n eine ganze Zahl von 0 bis 2, vorzugsweise gleich 1 ist.

4. Verfahren nach Anspruch 2, **dadurch gekennzeichnet, daß** der Komplex der folgenden Formel (A) entspricht:

$$- [Ru(SnCl_3)_6]^{4-} \qquad (A_1)$$

$$- [Ru(SnCl_3)_5Cl]^{4-} \qquad (A_2)$$

$$- [Ru(SnCl_3)_4Cl_2]^{4-} \qquad (A_3)$$

5. Verfahren nach einem der Ansprüche 2 bis 4, **dadurch gekennzeichnet, daß** man den Komplex durch Reaktion eines Rutheniumhalogenides und eines Zinnhalogenides in Anwesenheit einer Säure herstellt.

6. Verfahren nach Anspruch 5, **dadurch gekennzeichnet, daß** das Rutheniumhalogenid ein Ruthenium(III)-halogenid in wasserfreier oder hydratisierter Form ist, vorzugsweise ein Ruthenium(III)-Chlorid, und das Zinn(II)-halogenid in wasserfreier oder hydratisierter Form vorzugsweise das Zinn(II)-Chlorid ist.

7. Verfahren nach irgendeinem der Ansprüche 1 bis 6, **dadurch gekennzeichnet, daß** der Katalysator mindestens einen festen Träger umfaßt, imprägniert durch mindestens ein katalytisches Mittel wie durch seine Herstellungsart in irgendeinem der Ansprüche 2 bis 6 definiert.

8. Verfahren nach Anspruch 7, **dadurch gekennzeichnet, daß** der Träger in Form von Pulver, Kügelchen, Granulaten oder Extrudaten vorliegt.

9. Verfahren nach irgendeinem der Ansprüche 7 und 8, **dadurch gekennzeichnet, daß** der Träger ausgewählt wird unter den Metalloxiden, vorzugsweise den Oxiden von Aluminium, Silicium und/oder Zirkonium, den Aktivkohlen und den Harzen.

10. Verfahren nach irgendeinem der Ansprüche 1 bis 9, **dadurch gekennzeichnet, daß** der Katalysator eine Konzentration an Ruthenium [Ru] besitzt, wie sie nachfolgend in Gew.-% Trockenmasse definiert ist:

$$0{,}1 \leq [Ru] \leq 20$$

vorzugsweise

$$0{,}4 \leq [Ru] \leq 10$$

und noch mehr bevorzugt

$$1 \leq [Ru] \leq 8.$$

11. Verfahren nach irgendeinem der Ansprüche 1 bis 10, **dadurch gekennzeichnet, daß** das molare Verhältnis Sn/Ru des Katalysators wie folgt definiert ist:

$$0{,}1 \leq Sn/Ru \leq 30$$

vorzugsweise

$$0{,}4 \leq Sn/Ru \leq 10$$

und noch mehr bevorzugt

$$1 \leq \text{Sn/Ru} \leq 8.$$

**12.** Verfahren nach irgendeinem der Ansprüche 1 bis 11, **dadurch gekennzeichnet, daß** man die Hydrierung von ahs (II) zu ahhs (I) bei einer Reaktionstemperatur $\Theta r$ durchführt, die wie folgt in °C definiert ist:

$$200 \leq \Theta r \leq 600$$

vorzugsweise

$$400 \leq \Theta r \leq 500.$$

**13.** Verfahren nach irgendeinem der Ansprüche 1 bis 12, **dadurch gekennzeichnet, daß** man die Stöchiometrie der Reaktion in der Weise wählt, daß das Verhältnis von Hz/ahs (II) wie folgt in Äquivalenten definiert ist:

$$1 \leq \text{Hz/CII)} \leq 100$$

vorzugsweise

$$10 \leq \text{Hz/CII)} \leq 20.$$

**14.** Verfahren nach irgendeinem der Ansprüche 1 bis 13, **dadurch gekennzeichnet, daß** man die Hydrierung von ahs (II) in der Dampfphase durch heterogene Katalyse realisiert.

**15.** Verfahren nach irgendeinem der Ansprüche 1 bis 14, **dadurch gekennzeichnet, daß** es kontinuierlich durchgeführt wird und daß die Kontaktzeit $T_c$ der Reaktanden $H_2$ und ahs (II) mit dem Katalysator beträgt:

- zwischen 0,1 und 100 s, und
- noch mehr bevorzugt zwischen 0,1 und 10 s.

**16.** Verfahren nach irgendeinem der Ansprüche 1 bis 15, **dadurch gekennzeichnet, daß** man die Hydrierung von (II) zu (I) bei atmosphärischem Druck realisiert.

**17.** Verfahren nach irgendeinem der Ansprüche 1 bis 16, **dadurch gekennzeichnet, daß** das eingesetzte Gas $H_2$ mit mindestens einem gasförmigen Verdünnungsmittel vermischt wird, vorzugsweise ausgewählt unter den inerten Gasen, wobei Stickstoff besonders bevorzugt ist.

**Claims**

**1.** Process for preparing alkylhydrohalosilanes (ahhs) of formula (I):

$$(I) \qquad R_{4-m-n} SiH_m X_n$$

in which

- R represents independently a $C_1$-$C_6$ alkyl, preferably linear or branched, and more preferably still a methyl,
- x represents independently a halogen, preferably chlorine,
- m, n = 1 or 2 and m + n $\leq$ 3

by catalytic hydrogenation of alkylhalosilanes (ahs) of formula (II):

$$(II) \qquad R_{(4-p)} \, SiX_p$$

where p = 1, 2 or 3
in accordance with the reaction:

$$R_{(4-p)} \, SiX_p + H_2 \rightarrow R_{4-m-n} \, SiH_m X_n + H_{m'} X_{n'}$$

where n' + n = p and m' = 0 or 1
in the presence of a metallic catalyst,
**characterized in that** the catalyst comprises a bimetallic ruthenium/tin catalytic agent.

2. Process according to Claim 1, **characterized in that** the catalytic agent is obtained from the reduction of a ruthenium complex having an electrovalence of -4 and a coordination number of 6, the ligands being either a halogen atom or an anion of a tin halide.

3. Process according to Claim 2, **characterized in that** the complex corresponds to the following formula (A)

$$[Ru(SnX_3)_{6-n}X_n]^{4-} \qquad\qquad (A)$$

in said formula (A), X represents a halogen atom, preferably an atom of chlorine or bromine, and n is a number from 0 to 2, preferably 1.

4. Process according to Claim 2, **characterized in that** the complex corresponds to the following formula (A):

$$\text{-}[Ru(SnCl_3)_6]^{4-} \qquad (A_1)$$

$$\text{-}[Ru(SnCl_3)_5Cl]^{4-} \qquad (A_2)$$

$$\text{-}[Ru(SnCl_3)_4Cl_2]^{4-} \qquad (A_3)$$

5. Process according to any one of Claims 2 to 4, **characterized in that** the complex is prepared by reacting a ruthenium halide and a tin halide in the presence of an acid.

6. Process according to Claim 5, **characterized in that** the ruthenium halide is a ruthenium(III) halide, in anhydrous or hydrated form, preferably a ruthenium (III) chloride, and the tin(II) halide, in anhydrous or hydrated form, is preferably tin(II) chloride.

7. Process according to any one of Claims 1 to 6, **characterized in that** the catalyst comprises at least one solid support impregnated with at least one catalytic agent as defined, by the method by which it is obtained, in any one of Claims 2 to 6.

8. Process according to Claim 7, **characterized in that** the support is in the form of powder, beads, granules, or extrudates.

9. Process according to either of Claims 7 and 8, **characterized in that** the support is selected from metal oxides, preferably the oxides of aluminum, of silicon and/or of zirconium, active carbons, and resins.

10. Process according to any one of Claims 1 to 9, **characterized in that** the catalyst has a ruthenium concentration [Ru] defined as follows in % by weight on a dry basis:

$$0.1 \leq [Ru] \leq 20,$$

preferably

$$0.4 \leq [Ru] \leq 10,$$

and more preferably still

$$1 \leq [Ru] \leq 8.$$

11. Process according to any one of Claims 1 to 10, **characterized in that** the Sn/Ru molar ratio of the catalyst is defined as follows:

$$0.1 \leq Sn/Ru \leq 30,$$

preferably

$$0.4 \leq Sn/Ru \leq 10,$$

and more preferably still

$$1 \leq Sn/Ru \leq 8.$$

12. Process according to any one of Claims 1 to 11, **characterized in that** the hydrogenation of ahs (II) to ahhs (I) is carried out at a reaction temperature θr defined as follows in °C:

$$200 \leq \theta r \leq 600,$$

preferably

$$400 \leq \theta r \leq 500.$$

13. Process according to any one of Claims 1 to 12, **characterized in that** it is ensured that the stoichiometry of the reaction is such that the $H_2$/ahs (II) ratio is defined as follows in equivalents:

$$1 \leq H_2/ (II) \leq 100,$$

preferably

$$10 \leq H_2/(II) \leq 20.$$

14. Process according to any one of Claims 1 to 13, **characterized in that** the vapour phase hydrogenation of ahs (II) is carried out by heterogeneous catalysis.

15. Process according to any one of Claims 1 to 14, **characterized in that** it is employed continuously and **in that** the contact time $T_c$ of the reactants $H_2$ and ahs (II) with the catalyst is:

→ between 0.1 and 100 s
→ and more preferably still between 0.1 and 10 s.

16. Process according to any one of Claims 1 to 15, **characterized in that** the hydrogenation of (II) to (I) is carried out at atmospheric pressure.

17. Process according to any one of Claims 1 to 16, **characterized in that** the $H_2$ gas employed is mixed with at least one gaseous diluent selected preferably from inert gases, more particular preference being given to nitrogen.